# EUROPEAN PATENT SPECIFICATION

(11) **EP 2 530 945 B1**
(45) Date of publication and mention of the grant of the patent: **25.03.2015**
(21) Application number: 12153614.8
(22) Date of filing: 02.02.2012
(51) Int. Cl.: H04N 21/262, H04N 21/231, H04N 21/436, G06F 17/30, H04N 21/232, H04N 21/24

(54) **Server, data distribution system and data distribution method**
Server, Datenverteilungssystem und Datenverteilungsverfahren
Serveur, système de distribution de données et procédé de diffusion de données

(30) Priority: 31.05.2011 JP 2011122358; 27.07.2011 JP 2011164606
(43) Date of publication of application: 05.12.2012
(73) Proprietor: Kabushiki Kaisha Toshiba, Tokyo 105-8001 (JP)
(72) Inventor: Miyoshi, Eisuke, Tokyo (JP)
(74) Representative: Hoffmann Eitle

(56) References cited:
- EP-A1- 2 048 850
- US-B1- 6 629 109
- "UPNP DEVICE ARCHITECTURE 1.0 VERSION 1.0.1", UNIVERSAL PLUG AND PLAY (UPNP), , 2 December 2003 (2003-12-02), pages 1-73, XP008121804, Retrieved from the Internet: URL:http://hackipedia.org/Protocols/Intern et/UPnP/UPnP%20Device%20Architecture%20v1. 0.1%20Dec%202003.pdf

## Description

### FIELD

An embodiment described herein relates generally to a server, a data distribution system and a data distribution method for distributing various materials including video, music, photographs or the like from a server to a client.

### BACKGROUND

In recent years, as client-server systems provided with a server that stores data such as video and music, and clients (players) having a playback function, mechanisms such as DLNA (abbreviation of "Digital Living Network Alliance") are becoming widespread. Such mechanisms arrange the server and clients on a network and distribute data stored in the server to the clients on the network. These mechanisms are capable of mutually exchanging materials (hereinafter referred to as "data") such as video, music and photographs among home appliances mainly within households over a network. With such mechanisms, video or the like can be played back even at a place remote from a place where a file thereof is stored.

According to, for example, guidelines of the DLNA, home appliances and computers of different manufacturers can exchange data such as still images, video and music on a network. Connection on the network for that purpose may be any one of wired connection through Ethernet (registered trademark) and wireless connection via a wireless LAN.

Examples of target devices following the DLNA guidelines include DMS (abbreviation of "Digital Media Server") as a server and DMP (abbreviation of "Digital Media Player") as a client. The DMS is a device provided with functions of saving and distributing a digital content and a recording function such as a digital camera, video camera, cellular phone with a camera as well as personal computer or the like. On the other hand, the DMP is a device that plays back a content and is a television set that plays back digital broadcast data or a playback apparatus such as audio player.

In the DLNA, when the client displays a server list and selects one server name, a file list is displayed and when a user specifies one desired file name from the list, the specified file data is played back.

However, during playback of the file data, a screen display of the DMP indicates that playback is in progress and when the playback of the file data ends, for example, the screen of the DMP is changed back to the display of the file list when the data is specified. Suppose after the screen of the DMP is changed back to the file list, the DMS automatically erases the previously played back file data assuming that data must be erased starting with the oldest file because the own storage is filled to capacity. Since the DMP has already acquired the file list, the DMP continues to display the original file list without knowing that the file data has been erased. When the user selects the file data from the file list in an attempt to play back the same file data once again, since the file data has already been erased, the DMP determines it as an error and displays an error message on the screen. There is a problem in this case that the user is perplexed at being unable to play back the file data this time although the user could play back the file data before.

### BRIEF DESCRIPTION OF THE DRAWINGS

Fig. 1 is a flowchart illustrating an example of processing flow of an embodiment when a server receives a request from a client;
Fig. 2 is a diagram illustrating an example of the screen display in step S24 of Fig. 1;
Fig. 3 is a diagram illustrating an example of the screen display in step S26 of Fig. 1;
Fig. 4 is a diagram illustrating an example of log contents recorded in a DMS for a determination in step S30 of Fig. 1;
Fig. 5 is a general view of a data distribution system according to an embodiment;
Fig. 6 is a diagram illustrating operation of the data distribution system according to the embodiment; and
Fig. 7 is a flowchart illustrating an example of operation of the data distribution system according to the embodiment.

### DETAILED DESCRIPTION

A server according to an embodiment is a server that distributes, in response to a request from a client to acquire a file list of plural files stored in a storage section that stores data, information on the file list, including a state change determining section configured to determine, upon receiving the request to acquire the file list from the client, the presence or absence of a change in a state of a file included in the file list and a file list transmission section configured to transmit the file list including a file, a change in the state of which is determined by the state change determining section and the name of which is modified, to the client, which is the sender of the request to acquire the file list.

A data distribution method according to an embodiment for distributing, in response to a request from a client to acquire a file list of plural files stored in a storage section that stores data, information on the file list through a server, including the server determining, upon receiving the request to acquire the file list from the client, the presence or absence of a change in a state of a file included in the file list and the server transmitting the file list including a file, a change in the state of which is determined and the name of which is modified, to the client, which is the sender of the request to acquire the file list.

Hereinafter, an embodiment of the present invention will be described with reference to the accompanying drawings.

A data distribution system according to an embodiment described below is assumed to be a client-server system using DLNA, the client and the server are connected to each other via a local area network (hereinafter, simply referred to as "network") and the mutual connection is made according to a wireless scheme using a wireless LAN.

In the following descriptions, suppose, for example, at least one of several servers is a DLNA-compatible television receiver having a recording function and the client is a DLNA-compatible playback apparatus that can display data acquired from the server on a screen.

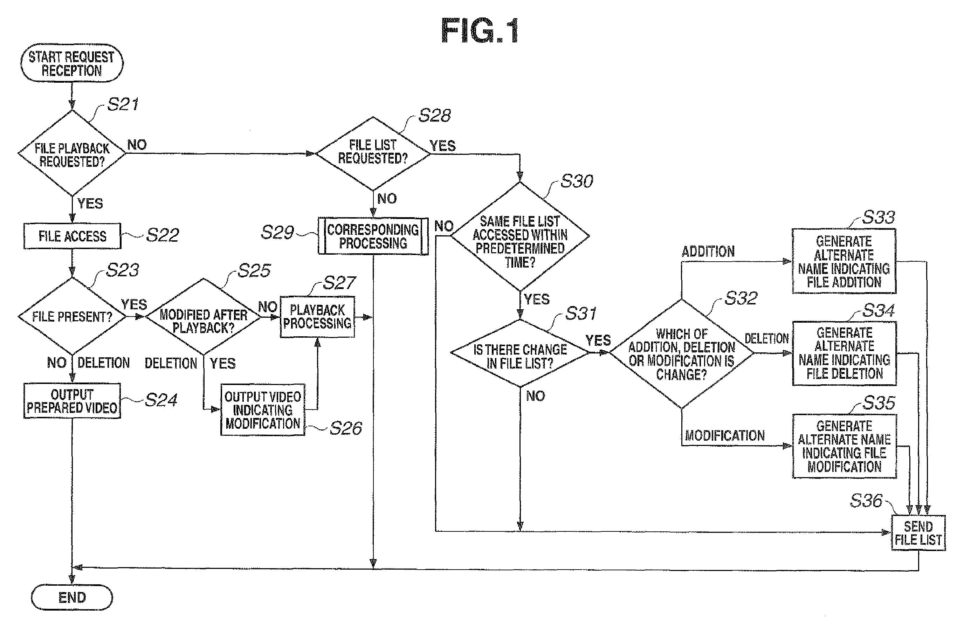

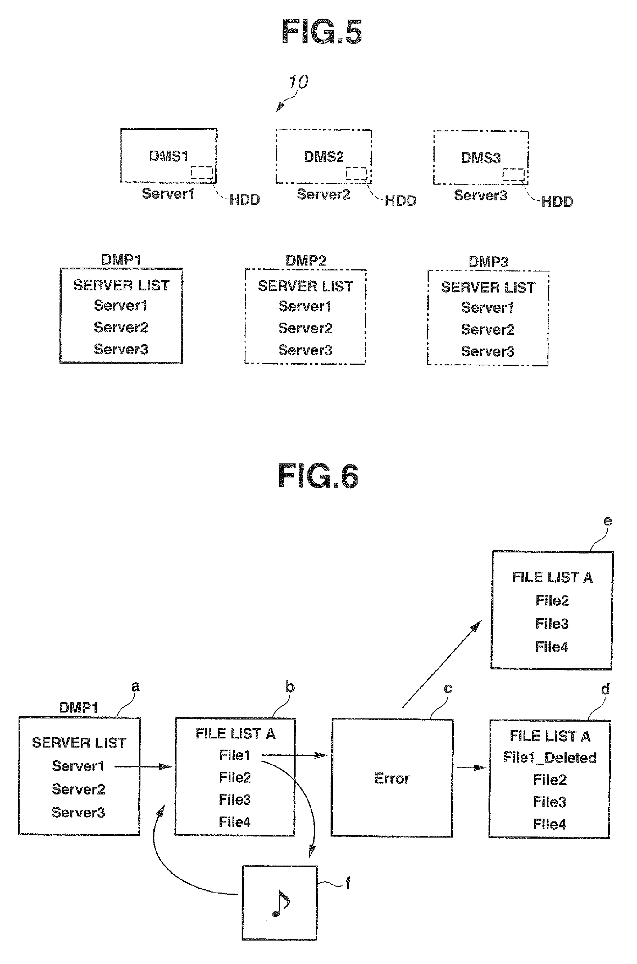

Fig. 1 to Fig. 4 show a flowcharts illustrating operation of the server and descriptive diagrams thereof according to the present embodiment. Furthermore, Fig. 5 to Fig. 7 show a general view and a flowchart illustrating operation of the data distribution system according to the embodiment.

First, a schematic configuration of the data distribution system is described with reference to Fig. 5.

Fig. 5 is a general view of the data distribution system of the embodiment.

The data distribution system 10 shown in Fig. 5 is provided with plural (three in the figure) servers DMS1, DMS2 and DMS3 that store data and plural (three in the figure) clients DMP1, DMP2 and DMP3. Each server is internally provided with a storage section such as a hard disk drive (hereinafter referred to as "HDD"). DMS1, DMS2 and DMS3, which are the servers, are, for example, DLNA-compatible television receivers that can receive and record digital television broadcasts or broadcast receiving apparatuses such as digital recorders. DMP1, DMP2 and DMP3, which are the clients, are DLNA-compatible playback apparatuses provided with a display section and preferably able to play back not only video but also music.

The mutual network connection between the server and the client of the data distribution system 10 may be based on a wired or wireless scheme. All of DMS1, DMS2 and DMS3 connected to the network have their server names published on the network and all of DMP1, DMP2 and DMP3 connected to the network detect DMS1, DMS2 and DMS3, display a list of the servers DMS1, DMS2 and DMS3 (also denoted as "server list") on each display section, thereby allowing the user on the client side to refer to the server list and select a desired server.

When the user on the client side refers to the server list and selects a server name of a desired server from the list, the client sends a file list request to the server, and the client can acquire the file list from the server and display the file list. That is, the server includes a file list transmission section. When the user selects a desired file from the file list, the client sends a playback request of the selected file to the server, the server distributes the file data to the client, and the client can thereby play back and display the desired file and provide the file to the user on the client side. That is, the client includes a display section for playing back the distributed data and displaying the file list. All of DMS1, DMS2 and DMS3 can distribute file data stored in the respective servers to any one client which makes a file playback request.

As described so far, the server has a connection with a storage section that stores data, distributes, in response to a request to acquire a file list from the client, information on the file list and distributes the file data, distribution of which is requested.

In the present embodiment, all the three DMS1, DMS2 and DMS3 can publish their server names on the network. Suppose the server names of DMS1, DMS2 and DMS3 will be expressed as Server 1, Server 2 and Server 3 respectively.

The embodiment in Fig. 5 illustrates three servers (DMS1, DMS2 and DMS3) and three clients (DMP1, DMP2 and DMP3) connected thereto over a network. A case will be mainly described hereinafter where the user of DMP1 selects, for example, server name Server 1 of DMS1 from the three server names Server 1, Server 2 and Server 3 displayed on DMP1 as an example. DMS1 and DMP1 are therefore shown by solid lines.

Next, operation of the server will be described with reference to the flowchart in Fig. 1. Fig. 1 is a flowchart illustrating an example of processing flow when the server receives a request from the client.

When the client side acquires a file list and some files are deleted and erased on the server side, this flowchart shows how the server handles a case where the server receives a request to play back the deleted files on the server from the client side and includes what process the server should perform when the server receives a request for the file list once again.

The processing in Fig. 1 starts when DMS1 receives a request from the DMP1 side.

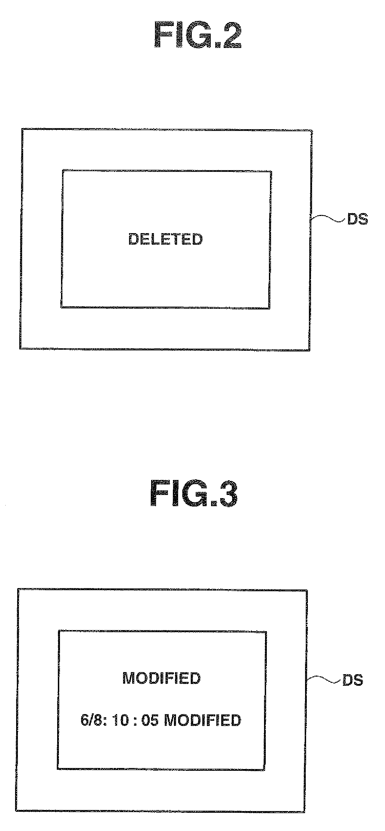

First, DMS1 determines whether or not the received request is a request to play back a file (step S21). When the request is a request to play back a file, DMS1 accesses the storage section of DMS1 (step S22) and determines the presence or absence of the requested file (step S23). When the requested file is not found, this means the file has been deleted from the list, and so DMS1 outputs video provided beforehand to DMP1 (step S24). A screen DS of the display section of DMP1 in this case displays, for example, video/character "Deleted" as shown in Fig. 2.

When the file is deleted, these steps S23 and S24 constitute an image output section that outputs an image indicating that the file is deleted.

When the requested file is found in step S23, DMS1 determines whether or not the contents of the requested file have been modified after sending the file to DMP1 (that is, after playback) (step S25). This determination can be made based on time information on file transmission history information of DMS1 and information of the file management system respectively.

When the requested file has been modified in step S25, DMS1 outputs video indicating that the file has been modified to DMP1 (step S26). The screen DS of the display section of DMP1 in this case plays back and displays, for example, video/characters "Modified 6/8: 10:05 modified" as shown in Fig. 3. As shown in Fig. 3, the time of file modification is shown and the user can thereby recognize when the file was modified. After step S26, the process moves to step S27.

These steps S25 and S26 constitute an image output section that outputs, when a request to distribute data regarding a file is received and if file has been modified, an image indicating the modification.

When the requested file has not been modified in step S25, playback processing on the file is performed (step S27).

On the other hand, when the received request is not a request to play back the file in step S21, DMS1 determines in step S28 whether or not the received request is a request for a file list from the client side. When the received request is not a request to play back the file in step S21, DMS1 performs corresponding processing (e.g., performs various kinds of processing in response to the request from the client side) (step S29). When the received request is a request to play back the file in step S21,DMS1 determines whether or not the same file list is accessed from the same client within a predetermined time (e.g., 10 minutes) (step S30). The storage section of DMS1 stores a record (log) regarding each DMP which sends the request from the client side within the predetermined time. That is, each DMS is provided with a function of storing details about for which file list the self-server was previously accessed from which DMP. To record the presence or absence of access for each DMP, the storage section stores, for example, a DMP-specific number such as an IP address of the DMP. Here, when, for example, any one DMP selects one of the server names Server 1, Server 2, Server 3, file list A, B or C is requested in correspondence with the selected server name Server 1, Server 2 or Server 3 in the form of a list on each DMS.

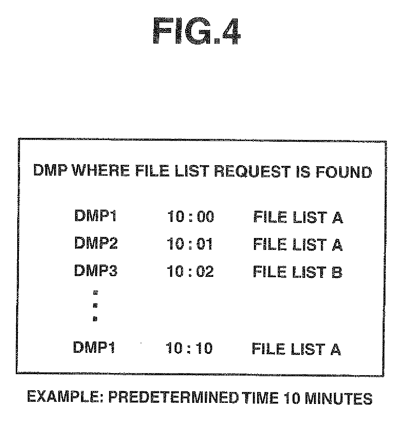

To be more specific, as shown in Fig. 4, the storage section keeps records (logs) regarding the time and file list name for each DMP (DMP1, DMP2 or DMP3) that requests a file list within, for example, 10 minutes. Fig. 4 shows a case where DMP1 accesses (requests) the same file list A twice in 10 minutes at time 10:00 and time 10:10. As will be described later, in such a case, DMS1 generates a file name according to a change (addition, deletion, modification) in the state of the file and outputs the file to the DMP. Therefore, the DMP reflects the change in the state of the file in the file list and displays the file list on the display section of the DMP.

Returning to Fig. 1, in step S30, when the file list request is a file list request within a predetermined time (e.g., 10 minutes) with respect to the same file list at the previous time, DMS1 determines whether or not there is a change in a file in the file list (step S31). When the file list request is not a file list request within a predetermined time (e.g., 10 minutes) with respect to the same file list as the previous time in step S30, the process moves to step S36 and DMS1 creates a file list related to the request and sends it to DMP1.

When there is a change in the file related to the request in the file list in step S31, the process moves to step S32. When there is no change in the file in the file list in step S31, DMS1 creates a file list without changing the file name in the file list at that time and sends it to DMP1 (step S36).

Steps S30 and 31 constitute a state change determining section that determines, when receiving a request to acquire a file list from the client, the presence or absence of a change in the state of a file included in the file list.

In step S32, DMS1 determines the contents of the change in the state of the file related to the request in the file list and the determination results can be divided into the following three cases. The contents of the three changes are addition, deletion and modification of the file.

Then when the change in the state of the file in step S32 is addition of a file, DMS1 generates an alternate file name (e.g., "Added" is added to the deleted file name) indicating addition of a file (step S33). Furthermore, when the change in the state of the file in step S32 is deletion of a file, DMS1 generates an alternate file name (e.g., "Deleted" is added to the deleted file name) indicating deletion of a file (step S34). When the change in the state of the file in step S32 is modification of a file, DMS1 generates an alternate file name (e.g., "Modified" is added to the deleted file name) indicating modification of a file. As described so far, the file name is modified by adding a character string indicating a change of the state to the file name.

After steps S33 to 35, for the file name for which an alternate file name is generated in steps S33 to 35 out of the file names in the file list related to the request at that time, DMS1 substitutes an alternate file name for the file name, creates and transmits a file list (step S36).

As described so far, steps S33 to 36 constitute a file list transmission section that transmits a file list including a file, a change in the state of which is detected and the name of which is changed, to the client that sends a request to acquire the file list. In steps S33 to 36 in particular, when files included in the file list include a file whose transmission is requested by the client within a predetermined time, the file name is modified.

Fig. 6 is a diagram illustrating operation of the data distribution system of the present embodiment.

Fig. 6 shows that when the user selects the server name Server 1 from a server list (Server list) a displayed on the screen DS of the display section of DMP1, DMP1 sends a file list request to DMS1 and a file list (File list) A denoted by reference character b is displayed on the screen DS of DMP1. These states are displayed on the screen DS of the display section of DMP1 as indicated by reference characters a and b. Thus, for the selection of the server name Server 1, the File list A including four Files 1, 2, 3 and 4 is displayed and when the user further selects File 1 (e.g., music data) from this File list A, the data of the File 1 is sent from DMS1 to the client DMP1, music is played back by a playback circuit (not shown) of DMP1 and is outputted as sound from a speaker or earphone (not shown). These states are indicated by reference characters b and f. During playback of music of the File 1, a screen f such as notes according to the music is displayed and when the music in the File 1 ends, the screen DS of DMP1 is returned to the display of the file list (File list) A when the music is selected. After the return, suppose DMP1 erases, for example, File 1 assuming that it has to erase files starting with the oldest one because the own storage is filled to capacity. Since DMP has already acquired the file list, DMP continues to display the original file list A (screen shown by reference character b) without knowing that the File 1 has been erased. When the user selects the File 1 in an attempt to listen to the music in the File 1 once again, since the File 1 has already been erased, DMP1 determines it as an error and displays an error message (Error) on the screen. This state is shown on the screen of reference character c.

Thus, since the user does not know that the file data has been deleted, there is conventionally a problem that the user is perplexed at being unable to play back the file data although the file data is displayed.

To solve such a problem, when the state of a file changes (e.g., addition, deletion, modification of file data), the present embodiment creates an alternate file name, changes the file name and thereby informs the user of the state of the file (state in which data has been added, deleted or modified). When modifying the file name according to the state of the file, it is preferable to generate an alternate name by including a character string expressing the state of the file in the original file name. For example, an alternate name File 1_Deleted is generated for the original file name File 1. That is, by rewriting or substituting the alternate name for the original file name of the file list, the server informs the user, for example, that the File 1 has been deleted.

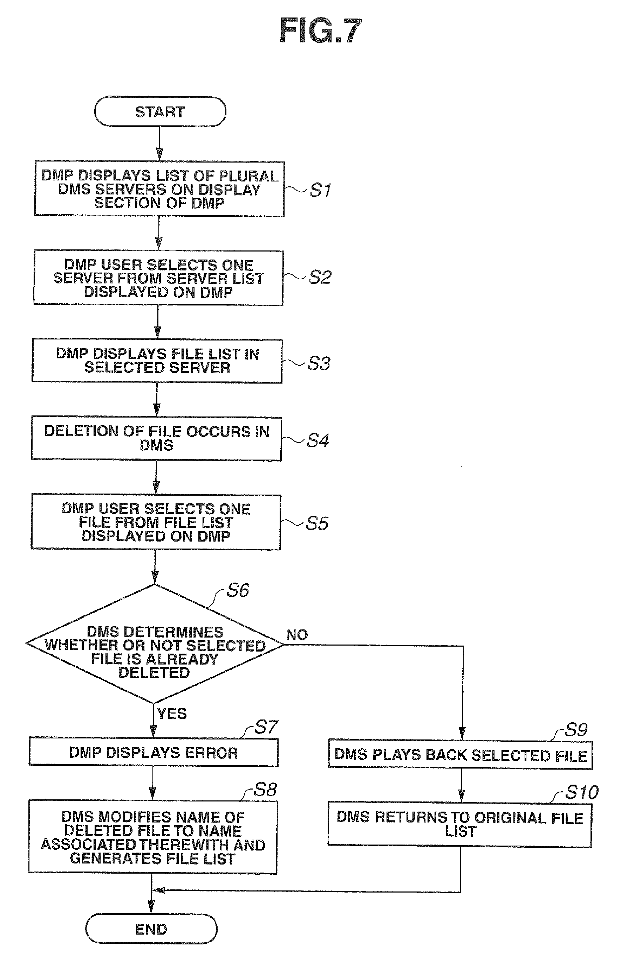

Next, the overall operation of the client server system according to the present embodiment will be described with reference to Fig. 7.

When DMS1, DMS2 and DMS3, which are the servers, and DMP1, DMP2 and DMP3, which are the clients, are connected to the network, and the respective devices of the server-client system are enabled to operate, DMP1, DMP2 and DMP3 can display the server names Server 1, Server 2 and Server 3 of the plural DMS1, DMS2 and DMS3 published on the network on the display section as a server list (Server list) respectively. Each of DMP1, DMP2 and DMP3 selects any one server name of the server names Server 1, Server 2 and Server 3 at the request of each user, thereby sends a file list request to a desired server and each client can thereby display the file list on the display section. The user selects a desired file (data which is a material such as a movie, music or a photograph) from the file list obtained as a result thereof, sends a file playback request to the server, and can thereby distribute file data to the server. Each of DMP1, DMP2 and DMP3 receives desired file data from the selected server, plays back and displays the file data.

Fig. 7 is a flowchart illustrating an example of overall operation of the data distribution system of the present embodiment. Fig. 7 illustrates operation when the same client selects a file in the case where the file has been deleted and in the case where the file has not been deleted. The flowchart in Fig. 7 will be described with reference to Fig. 6.

As shown by reference character a of Fig. 6, DMP1 displays the server list (Server list) of the plural servers DMS1, DMS2 and DMS3 published on the network on the display section of DMP1 first (step S1).

Next, the user of DMP1 selects, for example, the server name Server 1 from the server list displayed on DMP1 (step S2). In this way, DMP1 sends a file list request to DMS 1.

As a result, as shown by reference character b of Fig. 6, the display section of DMP1 displays the selected file list (File list) A in DMS1 (step S3).

Here, suppose the deletion of File 1 occurs automatically or artificially in DMS1 (step S4).

After that, the user of DMP1 selects, for example, the File 1 from the file list displayed on DMP1 (step S5). In this way, DMP1 sends a file playback request to DMS1.

DMS1 then determines whether or not the File 1 selected in step S5 has already been deleted (step S6).

In step S6, as shown by reference character c of Fig. 6, when the selected File 1 has already been deleted, an error (Error) is displayed (step S7).

When DMP1 sends a file list request within a predetermined time after that, DMS1 executes the processing shown in Fig. 1, modifies the file name of the deleted File 1 to a file name File 1_Deleted associated therewith, generates a new file list A, sends it to DMP1 and DMP1 displays this (step S8). That is, when DMP1 sends a file list request to DMS1 within a predetermined time after the error display in step S7, DMP1 acquires and displays the file list including the modified file name generated by DMS1.

Furthermore, when no file list request is sent within the predetermined time from DMP1, the processing shown in Fig. 1 is executed, a file list A not including the deleted file is generated and sent to DMP1 as shown on the screen shown by reference character e of Fig. 6.

When the selected file, File 1, has not been deleted in step S6, DMS1 plays back and transmits the selected File 1 (step S9), and when the playback ends, DMS1 changes the file list back to the original file list as shown by reference characters f and b of Fig. 6 (step S10).

As described so far, when the selected file is a file whose state has changed, the server modifies the name of the file according to the change of the state of the file, and can thereby inform the change of the state of the file. Thus, the server modifies the file name according to the change of the state of the file, publishes it and generates a modified file list as the file list, and the client can acquire and display this. In this way, when the state of the server changes, it is possible to inform the state to the client using an existing mechanism (e.g., mechanism based on DLNA guidelines).

As described so far, when the state of a file changes, the above-described server can inform the state to the client using an existing mechanism (e.g., mechanism based on DLNA guidelines).

Although the above-described example has been descried using DMS and DMP as an example of DLNA, a configuration using DMC (abbreviation of Digital Media Controller) and DMR (abbreviation of Digital Media Renderer) may also be used. Furthermore, the present embodiment is applicable not only to the DLNA but also to a distribution system between a server and a client following rules determined aside from the DLNA.

Regarding publication of an alternate name on the network according to the present embodiment, the alternate name may be published after the server state changes only until a predetermined number of accesses are made.

As described so far, according to the above-described embodiment, when the state of a file changes, it is possible to provide a server, a data distribution system and a data distribution method that can inform the state to a client using an existing mechanism.

While a certain embodiment has been described, the embodiment has been presented by way of example only, and are not intended to limit the scope of the inventions. Indeed, the novel methods and devices described herein may be embodied in a variety of other forms; furthermore, various omissions, substitutions and changes in the form of the methods and devices described herein may be made without departing from the spirit of the inventions. The accompanying claims and their equivalents are intended to cover such forms or modifications as would fall within the scope and spirit of the inventions.

## Claims

1. A server that distributes, in response to a request to acquire a file list from a client regarding plural files stored in a storage section that stores data, information of the file list, the server comprising:
a state change determining section configured to determine, upon receiving a request to acquire the file list from the client, whether or not the received request is to acquire the same file list as accessed by a previous request to acquire the file list received from the client within a predetermined time, and to determine presence or absence of a change in a state of a file included in the file list according to the received request if the received request is to acquire the same file list within predetermined time; and
a file list transmission section configured to prepare the file list according to the received request and transmit the file list to the client if the received request is not within the predetermined time, and to transmit the file list including the file with a file name changed, if the change in the state is determined by the state change determining section, to the client, which is the sender of the request to acquire the file list.

2. The server according to claim 1, wherein the change in the state of the file is addition, deletion or modification of the file.

3. The server according to claim 2, wherein when data distribution regarding a file is requested, if the file related to the data distribution request is deleted, an image indicating the deletion is outputted.

4. The server according to claim 2, wherein when data distribution regarding a file is requested, if the file related to the data distribution request is modified, an image indicating the modification is outputted.

5. The server according to any one of claims 1 to 4, wherein the file list transmission section modifies the file name by adding a character string indicating a change of the state to the file name.

6. The server according to any one of claims 1 to 5, wherein the server is a broadcast receiving apparatus.

7. A data distribution system comprising:
the server according to any one of claims 1 to 6; and
a client connected to the server over a network, configured to play back data distributed from the server and have a display section for displaying the file list.

8. The data distribution system according to claim 7, wherein the client selects a desired file from the file list displayed on the display section and thereby sends a request to distribute the data to the server.

9. A data distribution method for distributing, in response to a request to acquire a file list from a client regarding plural files stored in a storage section that stores data, information of the file list, the method comprising:
the server determining, upon receiving a request to acquire the file list from the client, whether or not the received request is to acquire the same file list as accessed by a previous request to acquire the file list received from the client within a predetermined time, and to determine presence or absence of a change in a state of a file included in the file list according to the received request if the received request is to acquire the same file list within the predetermined time; and
the server preparing the file list according to the received request and transmitting the file list to the client if the received request is not within the predetermined time and, the server transmitting the file list including the file with a file name changed, if the change in the state is determined, to the client, which is the sender of the request to acquire the file list.

10. The data distribution method according to claim 9, wherein the change in the state of the file is addition, deletion or modification of the file.

## Patentansprüche

1. Server, der als Reaktion auf eine Anfrage, von einem Client eine Dateiliste über mehrere Dateien, die in einer Daten speichernden Speicherpartie gespeichert sind, zu erlangen, Informationen der Dateiliste verteilt, wobei der Server Folgendes umfasst:
eine Partie zum Bestimmen einer Zustandsänderung, die konfiguriert ist, um beim Empfang einer Anfrage, die Dateiliste von dem Client zu erlangen, zu bestimmen, ob die empfangene Anfrage dazu gedacht ist oder nicht, die gleiche Dateiliste zu erlangen, wie sie von einer vorhergehenden Anfrage, die Dateiliste zu erlangen, die von dem Client innerhalb einer vorbestimmten Zeit empfangen wurde, abgerufen wurde, und um das Vorliegen oder Fehlen einer Änderung eines Zustands einer Datei, die in der Dateiliste enthalten ist, gemäß der empfangenen Anfrage zu bestimmen, falls die empfangene Anfrage dazu gedacht ist, die gleiche Dateiliste innerhalb einer vorbestimmten Zeit zu erlangen; und
eine Partie zum Übertragen einer Dateiliste, die konfiguriert ist, um die Dateiliste gemäß der empfangenen Anfrage vorzubereiten und die Dateiliste an den Client zu übertragen, falls die empfangene Anfrage nicht in die vorbestimmte Zeit fällt, und um die Dateiliste, welche die Datei mit einem geänderten Dateinamen enthält, falls die Änderung des Zustands durch die Partie zum Bestimmen einer Zustandsänderung bestimmt wird, an den Client zu übertragen, welcher der Sender der Anfrage zum Erlangen der Dateiliste ist.

2. Server nach Anspruch 1, wobei die Änderung des Zustands der Datei eine Ergänzung, Löschung oder Bearbeitung der Datei ist.

3. Server nach Anspruch 2, wobei, wenn eine Datenverteilung bezüglich einer Datei angefragt wird, falls die Datei, die mit der Datenverteilungsanfrage verbunden ist, gelöscht wird, ein Bild ausgegeben wird, das die Löschung angibt.

4. Server nach Anspruch 2, wobei, wenn eine Datenverteilung bezüglich einer Datei angefragt wird, falls die Datei, die mit der Datenverteilungsanfrage verbunden ist, bearbeitet wird, ein Bild ausgegeben wird, das die Bearbeitung angibt.

5. Server nach einem der Ansprüche 1 bis 4, wobei die Partie zum Übertragen einer Dateiliste den Dateinamen bearbeitet, indem sie eine Zeichenkette hinzufügt, die eine Änderung des Zustands des Dateinamens angibt.

6. Server nach einem der Ansprüche 1 bis 5, wobei der Server ein Rundfunkempfangsgerät ist.

7. Datenverteilungssystem, umfassend:
den Server nach einem der Ansprüche 1 bis 6; und
einen Client, der mit dem Server über ein Netzwerk verbunden ist und konfiguriert ist, um Daten wiederzugeben, die von dem Server verteilt werden, und um eine Anzeigepartie aufzuweisen, um die Dateiliste anzuzeigen.

8. Datenverteilungssystem nach Anspruch 7, wobei der Client eine gewünschte Datei aus der Dateiliste auswählt, die in der Anzeigepartie angezeigt wird, und dadurch eine Anfrage zum Verteilen der Daten an den Server sendet.

9. Datenverteilungsverfahren, um als Reaktion auf eine Anfrage, von einem Client eine Dateiliste bezüglich mehrerer Dateien zu erlangen, die in einer Daten speichernden Speicherpartie gespeichert sind, die Informationen der Dateiliste zu verteilen, wobei das Verfahren folgende Schritte umfasst:
Bestimmen durch den Server beim Empfang einer Anfrage, die Dateiliste von dem Client zu erlangen, ob die empfangene Anfrage dazu gedacht ist oder nicht, die gleiche Dateiliste zu erlangen, wie sie von einer vorhergehenden Anfrage, die Dateiliste zu erlangen, die von dem Client innerhalb einer vorbestimmten Zeit empfangen wurde, abgerufen wurde, und um das Vorliegen oder Fehlen einer Änderung eines Zustands einer Datei, die in der Dateiliste enthalten ist, gemäß der empfangenen Anfrage zu bestimmen, falls die empfangene Anfrage dazu gedacht ist, die gleiche Dateiliste innerhalb einer vorbestimmten Zeit zu erlangen; und
Vorbereiten durch den Server der Dateiliste gemäß der empfangenen Anfrage und Übertragen der Dateiliste an den Client, falls die empfangene Anfrage nicht in die vorbestimmte Zeit fällt, und Übertragen durch den Server der Dateiliste, welche die Datei mit einem geänderten Dateinamen enthält, falls die Änderung des Zustands bestimmt wird, an den Client, welcher der Sender der Anfrage zum Erlangen der Dateiliste ist.

10. Datenverteilungsverfahren nach Anspruch 9, wobei die Änderung des Zustands der Datei eine Ergänzung, eine Löschung oder eine Bearbeitung der Datei ist.

## Revendications

1. Serveur qui distribue, en réponse à une demande d'acquisition d'une liste de fichiers d'un client concernant plusieurs fichiers stockés dans une section de stockage qui stocke des données, des informations de la liste de fichiers, le serveur comprenant :
une section de détermination de changement d'état configurée pour déterminer, lors de la réception d'une demande d'acquisition de la liste de fichiers du client, si la demande reçue concerne l'acquisition ou non de la même liste de fichiers à laquelle a accédé une demande précédente d'acquisition de la liste de fichiers reçue du client en un délai prédéterminé, et concerne la détermination de la présence ou de l'absence d'un changement d'un état d'un fichier inclus dans la liste de fichiers selon la demande reçue si la demande reçue concerne l'acquisition de la même liste de fichiers en un délai prédéterminé ; et
une section de transmission de liste de fichiers configurée pour préparer la liste de fichiers selon la demande reçue et transmettre la liste de fichiers au client si la demande reçue n'est pas dans le délai prédéterminé, et pour transmettre la liste de fichiers incluant le fichier avec un nom de fichier changé, si le changement d'état est déterminé par la section de détermination de changement d'état, au client, qui est l'expéditeur de la demande d'acquisition de la liste de fichiers.

2. Serveur selon la revendication 1, dans lequel le changement d'état du fichier est l'ajout, la suppression ou la modification du fichier.

3. Serveur selon la revendication 2, dans lequel lorsqu'une distribution de données concernant un fichier est demandée, si le fichier relatif à la demande de distribution de données est supprimé, une image indiquant la suppression est produite en sortie.

4. Serveur selon la revendication 2, dans lequel lorsqu'une distribution de données concernant un fichier est demandée, si le fichier relatif à la demande de distribution de données est modifié, une image indiquant la modification est produite en sortie.

5. Serveur selon l'une quelconque des revendications 1 à 4, dans lequel la section de transmission de liste de fichiers modifie le nom de fichier en ajoutant une chaîne de caractères indiquant un changement d'état du nom de fichier.

6. Serveur selon l'une quelconque des revendications 1 à 5, dans lequel le serveur est un appareil récepteur de radiodiffusion.

7. Système de distribution de données comprenant :
le serveur selon l'une quelconque des revendications 1 à 6 ; et
un client connecté au serveur sur un réseau, configuré pour lire des données distribuées par le serveur et ayant une section d'affichage pour afficher la liste de fichiers.

8. Système de distribution de données selon la revendication 7, dans lequel le client sélectionne un fichier souhaité parmi la liste de fichiers affichée sur la section d'affichage et envoie ainsi une demande de distribution des données au serveur.

9. Procédé de distribution de données pour distribuer, en réponse à une demande d'acquisition d'une liste de fichiers d'un client concernant plusieurs fichiers stockés dans une section de stockage qui stocke des données, des informations de la liste de fichiers, le procédé comprenant :
la détermination par le serveur, lors de la réception d'une demande d'acquisition de la liste de fichiers du client, selon laquelle la demande reçue concerne l'acquisition ou non de la même liste de fichiers à laquelle a accédé une demande précédente d'acquisition de la liste de fichiers reçue du client en un délai prédéterminé, et concerne la détermination de la présence ou de l'absence d'un changement d'un état d'un fichier inclus dans la liste de fichiers selon la demande reçue si la demande reçue concerne l'acquisition de la même liste de fichiers en le délai prédéterminé ; et la préparation par le serveur de la liste de fichiers selon la demande reçue et la transmission de la liste de fichiers au client si la demande reçue n'est pas dans le délai prédéterminé et la transmission par le serveur de la liste de fichiers incluant le fichier avec un nom de fichier changé, si le changement d'état est déterminé, au client, qui est l'expéditeur de la demande d'acquisition de la liste de fichiers.

10. Procédé de distribution de données selon la revendication 9, dans lequel le changement d'état du fichier est l'ajout, la suppression ou la modification du fichier.
